# EUROPÄISCHE PATENTSCHRIFT

(11) **EP 3 700 765 B1**
(45) Veröffentlichungstag und Bekanntmachung des Hinweises auf die Patenterteilung: **11.10.2023**
(21) Anmeldenummer: 18815539.4
(22) Anmeldetag: 23.11.2018
(51) Int. Cl.: B60H 1/24, B60H 1/00

(54) **FAHRZEUG MIT TEMPERATURREGELUNG FÜR DEN FAHRGASTINNENRAUM**
VEHICLE HAVING TEMPERATURE CONTROL FOR THE PASSENGER INTERIOR
VÉHICULE À RÉGULATION DE LA TEMPÉRATURE POUR HABITACLE

(30) Priorität: 20.12.2017 DE 102017223338
(43) Veröffentlichungstag der Anmeldung: 02.09.2020
(73) Patentinhaber: Siemens Mobility GmbH, 81739 München (DE)
(72) Erfinder: HILDEBRANDT, Alexander, 44789 Bochum (DE); KASAP, Irfan, 44653 Herne (DE); SCHMITZ, Markus, 52249 Eschweiler (DE)
(74) Vertreter: Siemens Patent Attorneys
(86) Internationale Anmeldenummer: PCT/EP2018/082396
(87) Internationale Veröffentlichungsnummer: WO 2019/120884

(56) Entgegenhaltungen:
- DE-A1- 3 033 624
- DE-A1- 19 731 748
- JP-A- H 026 212
- JP-A- 2005 329 837
- US-A- 6 116 511

## Beschreibung

Die Erfindung bezieht sich auf ein Fahrzeug, insbesondere Schienenfahrzeug, zur Personenbeförderung, mit einem hinsichtlich seiner Temperatur geregelten Fahrgastinnenraum, der mit wenigstens einem Zulufteinlass für konditionierte Zuluft und wenigstens einem Auslass zum Abführen von Luft aus dem Fahrgastinnenraum ausgestattet ist, wobei die Luft mit Hilfe eines Lüfters aus dem Fahrgastinnenraum in einen Luftkanal gefördert ist und zum Erfassen einer im Fahrgastinnenraum vorliegenden Ist-Temperatur ein Temperaturfühler vorgesehen ist.

Ein solches Fahrzeug ist beispielsweise aus der JP 2005 329837 A oder der JP H02 6212 A bekannt. Das aus der JP 2005 329837 A bekannten Fahrzeug kommt dem beanspruchten Fahrzeug am nächsten.

Bei einem solchen Fahrzeug dient die mittels eines Temperaturfühlers vorgenommene Messung der Ist-Temperatur im Fahrgastinnenraum dazu, mit Hilfe einer Temperaturregelung einer zum Bereitstellen der konditionierten Luft vorgesehenen Klimaanlage eine vorgegebene Soll-Temperatur einzuhalten. Dabei ist zu berücksichtigen, dass solche Temperaturfühler fest zu montieren sind. Es ergibt sich die Schwierigkeit, den Temperaturfühler an einem Ort zu montieren, bei dem die den Temperaturfühler umgebende Luft von ihrer Temperatur her die tatsächliche Ist-Temperatur im Fahrgastinnenraum wiedergibt.

Beim Messen der Temperatur an der Einbauposition des Temperaturfühlers kann es dazu kommen, dass erhebliche Abweichungen zu dem erforderlichen Temperatur-Istwert zu Stande kommen. Beispielsweise bei der Umströmung des Temperaturfühlers mit Fehlluft ergeben sich unzutreffende Messergebnisse. Es ist ebenfalls denkbar, dass sich die Raumluft auf dem Weg zum Temperaturfühler erwärmt oder abkühlt, beispielsweise durch Sonneneinstrahlung oder kältere oder wärmere Oberflächen. Dies beeinträchtigt die Qualität der Regelung, so dass insbesondere auch auf einen falschen Soll-Temperaturwert eingeregelt wird.

Ausgehend hiervon liegt der Erfindung die Aufgabe zugrunde, ein Fahrzeug der eingangs genannten Art derart weiterzuentwickeln, dass eine Ist-Temperatur für den Fahrgastinnenraum zuverlässiger messbar ist.

Diese Aufgabe wird gelöst durch ein Fahrzeug mit den Merkmalen des Anspruchs 1.

Danach ist bei dem eingangs genannten Fahrzeug vorgesehen, dass ein zusätzlicher Strömungskanal vorgesehen ist, dessen Einlassende in den Fahrgastinnenraum mündet und dessen Auslassende auf einer Unterdruckseite des Lüfters sowie auf der Seite des Lüfters in Richtung nach außerhalb des Fahrzeugs angeordnet ist, und der Temperaturfühler in einem Längsabschnitt des zusätzlichen Kanals angeordnet ist.

Der vorgesehene zusätzliche Strömungskanal bewirkt, dass der Temperaturfühler hinsichtlich seines Einbauorts variabler gestaltet werden kann. Von Bedeutung ist lediglich, dass der Temperaturfühler an irgendeinem Ort innerhalb des zusätzlichen, Raumluft mit der Ist-Temperatur das Fahrgastinnenraums führenden Strömungskanals angeordnet ist.

Dabei wird davon Gebrauch gemacht, dass es wesentlich einfacher ist, ein Einlassende des zusätzlichen Strömungskanals geeignet im Bereich des Fahrgastinnenraums anzuordnen, als dies beim Einbau eines fest zu installierenden Temperaturfühlers der Fall wäre.

Zudem ergibt sich dadurch, dass Auslassende des zusätzlichen Strömungskanals in einem Unterdruckbereich eines Lüfters angeordnet ist, eine aufwandsarme Realisierung einer erforderlichen Luftströmung in dem zusätzlichen Strömungskanal von dem Fahrgastinnenraum aus in den Unterdruckbereich des Lüfters.

Der Strömungskanal kann insbesondere als biegsamer Schlauch ausgeführt sein.

In einem bevorzugten Ausführungsbeispiel ist der Temperaturfühler in dem Auslassende des zusätzlichen Kanals angeordnet. In diesem Fall kann der Temperaturfühler unmittelbar in den Luftkanal montiert sein, d.h. in ihn hineinragen, und zwar im Unterdruckbereich des Lüfters. Das Auslassende des zusätzlichen Kanals kann dann über den Temperaturfühler gestülpt sein, so dass dieser nur die vergleichsweise unverfälschte Raumluft aus dem zusätzlichen Kanal "sieht".

Alternativ ist es auch möglich, dass der Temperaturfühler in einem Längsabschnitt des zusätzlichen Kanals und benachbart zu dem Einlassende des zusätzlichen Kanals angeordnet ist. Bei dieser Ausführungsform ist am zusätzlichen Kanal ein elektrischer Anschluss für den Temperaturfühler vorzusehen.

Das Einlassende des zusätzlichen Kanals kann entfernt von dem wenigstens einen Zulufteinlass des Fahrgastinnenraums angeordnet sein. Dies bewirkt eine geringe Beeinträchtigung der Messwerte des Temperaturfühlers durch auftretende Fehlluft, wie sie beim Eintritt von Warm- oder Kaltluft durch den Zulufteinlass des Fahrgastinnenraums auftritt.

Der Zulufteinlass kann für Kaltluft vorgesehen sein, während ein weiterer Zulufteinlass für Warmluft vorgesehen sein kann, wobei das Einlassende des zusätzlichen Kanals entfernt sowohl von dem Zulufteinlass für Kaltluft als auch von dem Zulufteinlass für Warmluft angeordnet sein kann. Bei dieser Ausführungsform wird der Tatsache Rechnung getragen, dass in vielen Fahrzeugen, insbesondere Schienenfahrzeugen, im Deckenbereich ein Zulufteinlass für Kaltluft und im Bodenbereich ein Zulufteinlass für Warmluft eingebaut ist. Das Einlassende des zusätzlichen Kanals sollte bevorzugt entfernt von diesen beiden Zulufteinlässen angeordnet sein, so dass ein Fehllufteintrag vermindert ist.

Je nach Ausführung einer Umluft-/Fortluftansaugung können verschiedene Lüfter eines Klimakanalsystems zur Bereitstellung des Unterdruckbereichs zum Einsatz kommen, von dem aus Luft geeigneter Temperatur durch den zusätzlichen Kanal angesaugt wird. In einem Ausführungsbeispiel führt der Luftkanal sowohl Umluft als auch Fortluft. Stromabwärts des Lüfters kann dann eine Verzweigung des Kanalsystems in einen Umluftkanal, der zur Klimaanlage führt, und einen Fortluftkanal, der zu einer Außenfläche des Fahrzeugs führt, vorliegen. Zur Bereitstellung des Unterdruckbereichs kann jedoch auch der Luftkanal ausschließlich Fortluft führen. In diesem Fall wird aus dem Fahrgastinnenraum entweder ausschließlich Fortluft abgesaugt und nach außerhalb des Fahrzeugs geführt oder dieser Luftkanal verläuft strömungstechnisch parallel zu einem Umluftkanal, der zur Klimaanlage führt.

Es ist hervorzuheben, dass auch mehrere Temperaturfühler zum Einsatz kommen können, deren Messwerte dann dahingehend ausgewertet werden, welches die tatsächliche Ist-Temperatur im Fahrgastinnenraum ist. Beispielsweise ist es möglich, dass sowohl in einem vorgesehenen Umluftkanal als auch in einem vorgesehenen Fortluftkanal jeweils ein Temperaturfühler angeordnet ist. In diesem Fall ist entweder der zusätzliche Kanal in Richtung auf den Umluft- und den Fortluftkanal verzweigt und die Temperaturfühler sind beispielsweise in jeweiligen Kanalenden der beiden Zweige untergebracht. Alternativ können auch zwei unabhängige zusätzliche Kanäle vorgesehen sein, deren jeder ein dem Fahrgastinnenraum zugeordnetes sowie ein einem Unterdruckbereich stromaufwärts eines vorgesehenen Lüfters gelegenes Ende aufweist.

Ausführungsbeispiele der Erfindung werden nachfolgend unter Bezugnahme auf die Zeichnung noch näher erläutert. Es zeigen:
- Figur 1: einen Fahrgastinnenraum eines Schienenfahrzeugs in Kombination mit angeschlossenen Klimakanalkomponenten in einer ersten Ausführungsform,
- Figur 2: einen Fahrgastinnenraum eines Schienenfahrzeugs in Kombination mit angeschlossenen Klimakanalkomponenten in einer zweiten Ausführungsform und
- Figur 3: eine schematische Ansicht einer Ansaugvorrichtung für Umluft und Fortluft eines Klimasystems eines Schienenfahrzeugs.

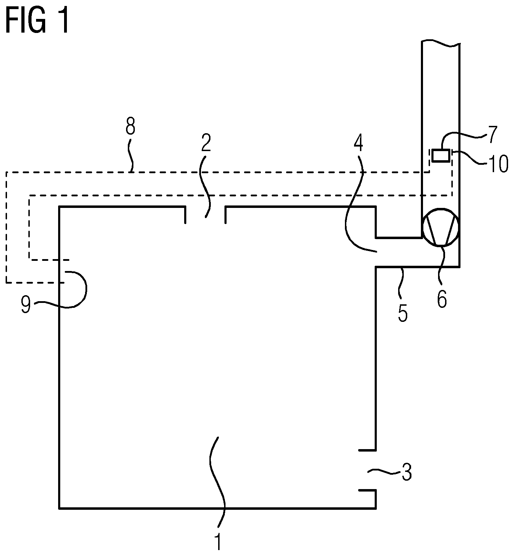

In Figur 1 ist ein Fahrgastinnenraum 1 eines Schienenfahrzeugs dargestellt. Die Temperatur in diesem Fahrzeuginnenraum 1 soll auf einem vorgegebenen Wert (Soll-Temperatur) gehalten werden. Dazu dient eine (hier nicht dargestellte) mit einer Temperaturregelung ausgestattete Klimaanlage, welche, abhängig von gemessenen Ist-Temperaturen in dem Fahrzeuginnenraum 1 Warmluft und/oder Kaltluft zur Verfügung stellt. In einem Deckenbereich des Fahrgastinnenraums 1 befindet sich ein Zulufteinlass 2 für Kaltluft, während im Bodenbereich des Fahrgastinnenraums 1 ein Zulufteinlass 3 für Warmluft vorgesehen ist. Beide Zulufteinlässe 2, 3 sind über (hier nicht dargestellte) Klimakanäle an die Klimaanlage angeschlossen.

Zum Abführen von Luft aus dem Fahrgastinnenraum ist ein Auslass 4 vorgesehen, der sich im dargestellten Ausführungsbeispiel ebenfalls im Deckenbereich des Fahrgastinnenraums 1 befindet. An den Auslass 4 schließt sich ein Luftkanal 5 an, über den Luft aus dem Fahrgastinnenraum 1 angesaugt wird, und zwar mit Hilfe eines Lüfters 6, der sich innerhalb des Luftkanals 5 befindet.

Zum Messen einer Temperatur, welche die tatsächliche Temperatur im Fahrgastinnenraum 1 möglichst unverfälscht wiedergibt, dient ein Temperaturfühler 7, der stromabwärts des Lüfters 6 in einem Bereich niedrigeren Drucks als im Fahrgastinnenraum 1 in dem Luftkanal 5 angeordnet ist.

Da die Temperatur der Luft auf der Austrittsseite des Lüfters 6 nicht mehr der Ist-Temperatur im Fahrgastinnenraum 1 entspricht, wird folgende Maßnahme getroffen: ein beispielsweise als flexibler Schlauch ausgebildeter zusätzlicher Kanal 8 ist von einem Randbereich des Fahrgastinnenraums 1 aus außerhalb des Fahrgastinnenraums 1 zu der Unterdruckseite des Lüfters 6 geführt. Durch den Druckgradienten zwischen dem Fahrgastinnenraum 1 und dem Unterdruckbereich stromabwärts des Lüfters 6 strömt über ein Einlassende 9 des zusätzlichen Kanals 8 angesaugte Raumluft durch den Kanal 8 hindurch bis zu dem Unterdruckbereich unmittelbar stromabwärts des Lüfters 6. Insbesondere liegt ein Auslassende 10 des zusätzlichen Kanals 8 in besagtem Unterdruckbereich.

Im vorliegenden Ausführungsbeispiel ist der Temperaturfühler 7, bei dem es sich typischer Weise um ein langgestrecktes Thermoelement handelt, in das Auslassende 10 gesetzt, so dass der Temperaturfühler 7 von Luft umströmt ist, die möglichst unverfälscht aus dem Fahrgastinnenraum 1 stammt. Dabei ist das Material des zusätzlichen Kanals 8 so gewählt, dass eine geeignete Temperaturisolierung nach außen gewährleistet ist.

Die von dem Temperaturfühler 7 gemessene Temperatur wird als Ist-Temperatur des Fahrgastinnenraums 1 der Temperaturregelung der Klimaanlage zugeleitet, so dass eine vorgesehene Steuerung der Klimaanlage geeignete Luftmengen für Warmluft und Kaltluft berechnen und zur Verfügung stellen kann, so dass im Fahrgastinnenraum 1 eine gewünschte Soll-Temperatur erreicht wird.

Das Einlassende 9 des zusätzlichen Kanals 8 ist von dem Zulufteinlass 2 für Kaltluft und dem Zulufteinlass 3 für Warmluft entfernt angeordnet, so dass die über den zusätzlichen Kanal 8 angesaugte Luft möglichst nicht von einströmender Kalt- oder Warmluft in ihrer Temperatur beeinflusst ist. Beispielsweise kann das Einlassende 9 des zusätzlichen Kanals 8 in einem Voutenbereich des Fahrzeugs angeordnet sein.

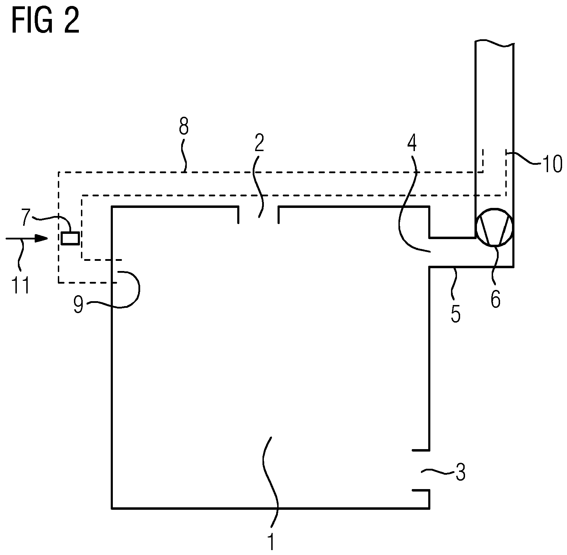

Figur 2 zeigt ein alternatives Ausführungsbeispiel zu demjenigen, das anhand von Figur 1 erläutert wurde. Einziger Unterschied ist die Anordnung des Temperaturfühlers 7. Dieser kann grundsätzlich von dem Einlassende 9 aus entlang des zusätzlichen Kanals 8 bis zu dem Auslassende 10 beliebig innerhalb des Kanals 8 angeordnet sein. Figur 2 zeigt nun ein Ausführungsbeispiel, bei dem der Temperaturfühler dem Einlassende 9 benachbart angeordnet ist, und zwar in einem Längsabschnitt 11 des zusätzlichen Kanals 8.

Bei den Ausführungsbeispielen nach den Figuren 1 und 2 wird ein einzelner Lüfter 6 dafür benutzt, Raumluft über den Auslass 4 abzusaugen. Diese Raumluft kann beispielsweise vollständig als Fortluft behandelt und nach außerhalb des Fahrzeugs geführt werden. Es ist aber auch denkbar, dass sich der Luftkanal 5 stromaufwärts des Lüfters 6 unter Zwischenschaltung geeigneter Luftleitelemente auf einen hier nicht dargestellten Umluftkanal und einen hier ebenfalls nicht dargestellten Fortluftkanal aufgeteilt wird. Die ausgekoppelte Umluft wird zu der Klimaanlage geführt und ist Teil der Zuluft, die von der Klimaanlage in Richtung auf den Fahrgastinnenraum 1 gefördert wird.

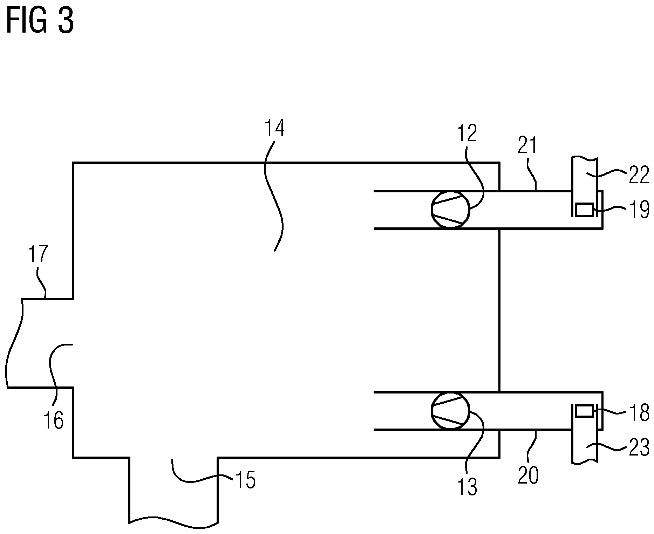

Im Ausführungsbeispiel nach Figur 3 kommen zwei gesonderte Lüfter 12, 13 zum Einsatz, wobei der Lüfter 12 zur Umluftansaugung und der Lüfter 13 zur Fortluftansaugung dient. Beide Lüfter 12, 13 saugen Luft aus einer Kammer 14 eines Kanalsystems an. Dabei ist die Kammer 14 auch mit einem Frischlufteinlass 15 sowie einem Zulufteinlass 16 ausgestattet. Der Zulufteinlass 16 ist über einen Kanal 17, der funktionell dem Luftkanal 5 der Figuren 1 und 2 entspricht, mit dem Auslass 4 des Fahrgastinnenraums 1 verbunden. In dem vorliegenden Ausführungsbeispiel sind zwei Temperaturfühler 18, 19 vorgesehen, wobei sich der eine Temperaturfühler 18 in einem den Lüfter 13 umfassenden Fortluftkanal 20 und der andere 19 in einem den Lüfter 12 umfassenden Umluftkanal 21 befindet, und zwar jeweils stromabwärts des zugeordneten Lüfters 12, 13 in dem dort vorliegenden Unterdruckbereich. Wiederum sind die Temperaturfühler 18, 19 in Auslassenden 22, 23 einer zusätzlichen Kanalanordnung eingesetzt, so dass sie von Raumluft aus dem Fahrgastinnenraum 1 umströmt werden.

Es kann vorgesehen sein, dass für jeden der Temperaturfühler 18, 19 ein eigner zusätzlicher Kanal verbaut ist. Ebenso ist es möglich, dass die beiden Auslassenden 22, 23 an anderer Stelle zu einem gemeinsamen zusätzlichen Kanal zusammengeführt sind, dessen dem Fahrgastinnenraum 1 zugeordnetes Ende in derselben Weise angeordnet ist, wie bei den anhand von den Figuren 1 und 2 erläuterten Ausführungsbeispielen.

## Patentansprüche

1. Fahrzeug zur Personenbeförderung, mit einem hinsichtlich seiner Temperatur geregelten Fahrgastinnenraum (1), der mit wenigstens einem Zulufteinlass (2, 3) für konditionierte Zuluft und wenigstens einem Auslass (4) zum Abführen von Luft aus dem Fahrgastinnenraum (1) ausgestattet ist, wobei die Luft mit Hilfe eines Lüfters (6, 12, 13) aus dem Fahrgastinnenraum (1) in einen Luftkanal (5; 20, 21) gefördert ist und zum Erfassen einer im Fahrgastinnenraum (1) vorliegenden Ist-Temperatur ein Temperaturfühler (7; 18, 19) vorgesehen ist,
**dadurch gekennzeichnet, dass**
ein zusätzlicher Strömungskanal (8) vorgesehen ist, dessen Einlassende (9) in den Fahrgastinnenraum (1) mündet und dessen Auslassende (10; 22, 23) auf einer Unterdruckseite des Lüfters (6, 12, 13) sowie auf der Seite des Lüfters (6, 12, 13) in Richtung nach außerhalb des Fahrzeugs angeordnet ist, und der Temperaturfühler (7; 18, 19) in einem Längsabschnitt (11) des zusätzlichen Kanals (8, 17) angeordnet ist.

2. Fahrzeug nach Anspruch 1,
**dadurch gekennzeichnet, dass**
der Temperaturfühler (7; 18, 19) in dem Auslassende (10; 22, 23) des zusätzlichen Kanals (8, 17) angeordnet ist.

3. Fahrzeug nach Anspruch 1,
**dadurch gekennzeichnet, dass**
der Temperaturfühler (7; 18, 19) in dem Längsabschnitt (11) des zusätzlichen Kanals (8) und benachbart zu dem Einlassende (9) des zusätzlichen Kanals (8) angeordnet ist.

4. Fahrzeug nach einem der Ansprüche 1 bis 3,
**dadurch gekennzeichnet, dass**
das Einlassende (9) des zusätzlichen Kanals (8 entfernt von dem wenigstens einen Zulufteinlass (2, 3) des Fahrgastinnenraums (1) angeordnet ist.

5. Fahrzeug nach einem der Ansprüche 1 bis 4,
**dadurch gekennzeichnet, dass**
der Zulufteinlass (2) für Kaltluft vorgesehen ist und ein weiterer Zulufteinlass (3) für Warmluft vorgesehen ist, wobei dass Einlassende (9) des zusätzlichen Kanals (8) entfernt sowohl von dem Zulufteinlass (2) für Kaltluft als auch von dem Zulufteinlass (3) für Warmluft angeordnet ist.

6. Fahrzeug nach einem der Ansprüche 1 bis 5,
**dadurch gekennzeichnet, dass**
der Luftkanal (5) sowohl Umluft als auch Fortluft führt.

7. Fahrzeug nach einem der Ansprüche 1 bis 5,
**dadurch gekennzeichnet, dass**
der Luftkanal (5) ausschließlich Fortluft führt.

## Claims

1. Vehicle for passenger transport, having a passenger compartment (1) which is regulated in terms of its temperature and which is equipped with at least one supply-air inlet (2, 3) for conditioned supply air and with at least one outlet (4) for discharge of air from the passenger compartment (1), wherein the air is conveyed from the passenger compartment (1) into an air channel (5; 20, 21) with the aid of a fan (6, 12, 13) and, for detecting an actual temperature prevailing in the passenger compartment (1), provision is made of a temperature sensor (7; 18, 19),
**characterized in that**
provision is made of an additional flow channel (8) whose inlet end (9) opens out into the passenger compartment (1) and whose outlet end (10; 22, 23) is arranged on a negative-pressure side of the fan (6, 12, 13) and on the side of the fan (6, 12, 13) towards the outside of the vehicle, and the temperature sensor (7; 18, 19) is arranged in a longitudinal section (11) of the additional channel (8, 17).

2. Vehicle according to Claim 1,
**characterized in that**
the temperature sensor (7; 18, 19) is arranged in the outlet end (10; 22, 23) of the additional channel (8, 17).

3. Vehicle according to Claim 1,
**characterized in that**
the temperature sensor (7; 18, 19) is arranged in the longitudinal section (11) of the additional channel (8) and adjacent to the inlet end (9) of the additional channel (8).

4. Vehicle according to one of Claims 1 to 3,
**characterized in that**
the inlet end (9) of the additional channel (8) is arranged at a distance from the at least one supply-air inlet (2, 3) of the passenger compartment (1).

5. Vehicle according to one of Claims 1 to 4,
**characterized in that**
the supply-air inlet (2) is intended for cold air and a further supply-air inlet (3) is intended for warm air, wherein the inlet end (9) of the additional channel (8) is arranged at a distance both from the supply-air inlet (2) for cold air and from the supply-air inlet (3) for warm air.

6. Vehicle according to one of Claims 1 to 5,
**characterized in that**
the air channel (5) carries both circulation air and expulsion air.

7. Vehicle according to one of Claims 1 to 5,
**characterized in that**
the air channel (5) carries only expulsion air.

## Revendications

1. Véhicule de transport de passagers ayant un espace (1) intérieur pour les passagers, régulé du point de vue de sa température, qui est équipé d'au moins une entrée (2, 3) d'air, pour de l'air conditionné et au moins une sortie (4) d'évacuation de l'air de l'espace (1) intérieur pour les passagers, dans lequel l'air est véhiculé à l'aide d'un ventilateur (6, 12, 13) de l'espace (1) intérieur pour les passagers à un conduit (5 ; 20, 21) pour de l'air et il est prévu une sonde (7 ; 18, 19) de température pour relever une température réelle régnant dans l'espace (1) intérieur pour les passagers,
**caractérisé en ce que**
il est prévu un conduit (8) supplémentaire d'écoulement, dont l'extrémité (9) d'entrée débouche dans l'espace (1) intérieur pour les passagers et dont l'extrémité (10 ; 22, 23) de sortie est disposée d'un côté en dépression du ventilateur (6, 12, 13) ainsi que du côté du ventilateur (6, 12, 13) en direction vers l'extérieur du véhicule, et la sonde (7 ; 18, 19) de température est montée dans un tronçon (11) longitudinal du conduit (8, 17) supplémentaire.

2. Véhicule suivant la revendication 1,
**caractérisé en ce que**
la sonde (7 ; 18, 19) de température est montée dans l'extrémité (10 ; 22, 23) de sortie du conduit (8, 17) supplémentaire.

3. Véhicule suivant la revendication 1,
**caractérisé en ce que**
la sonde (7 ; 18, 19) de température est montée dans le tronçon (11) longitudinal du conduit (8) supplémentaire et au voisinage de l'extrémité (9) d'entrée du conduit (8) supplémentaire.

4. Véhicule suivant l'une des revendications 1 à 3,
**caractérisé en ce que**
l'extrémité (9) d'entrée du conduit (8) supplémentaire est loin de la au moins une entrée (2, 3) d'air conditionné de l'espace (1) intérieur pour les passagers.

5. Véhicule suivant l'une des revendications 1 à 4,
**caractérisé en ce que**
l'entrée (2) d'entrée d'air conditionné est prévue pour de l'air froid et il est prévu une autre entrée (3) d'air conditionné pour de l'air chaud, dans lequel l'extrémité (9) d'entrée du conduit (8) supplémentaire est loin tant de l'entrée (2) d'air conditionné pour de l'air froid qu'également de l'entrée (3) d'air conditionné pour de l'air chaud.

6. Véhicule suivant l'une des revendications 1 à 5,
**caractérisé en ce que**
le conduit (5) pour de l'air conduit tant de l'air de recirculation que de l'air frais.

7. Véhicule suivant l'une des revendications 1 à 5,
**caractérisé en ce que**
le conduit (5) pour de l'air conduit exclusivement de l'air frais.
